# EUROPEAN PATENT APPLICATION

(11) **EP 4 618 226 A1**
(43) Date of publication of application: **17.09.2025**
(21) Application number: 23902715.4
(22) Date of filing: 12.12.2023
(51) Int. Cl.: H01M 10/0587, B65H 19/30

(54) **CELL UNLOADING DEVICE AND CELL WINDING APPARATUS**

(30) Priority: 16.12.2022 CN 202223420779 U
(71) Applicant: Wuxi Lead Intelligent Equipment Co., Ltd., Wuxi, Jiangsu 214028 (CN)
(72) Inventor: YAO, Taiquan, Wuxi, Jiangsu 214028 (CN); ZHOU, Yao, Wuxi, Jiangsu 214028 (CN)
(74) Representative: Rau, Schneck & Hübner Patentanwälte Rechtsanwälte PartGmbB
(86) International application number: PCT/CN2023/138226
(87) International publication number: WO 2024/125519

(57) **Abstract**

Disclosed is a cell winding device, which includes the cell unloading apparatus. The cell unloading apparatus includes: a frame, a first clamping assembly, a second clamping assembly, a third clamping assembly, a fourth clamping assembly and a driving assembly. The first clamping assembly and the second clamping assembly are arranged on the frame at an interval along a first direction, and are movable respectively to clamp or release the cell. The third clamping assembly and the fourth clamping assembly are arranged on the frame at an interval along a second direction, and are movable respectively to clamp or release the cell. The third clamping assembly, the fourth clamping assembly, the first clamping assembly and the second clamping assembly are distributed at intervals in a circumferential direction of the winding member, and the fourth clamping assembly is located below the first clamping assembly, the second clamping assembly and the third clamping assembly in a vertical direction. The driving assembly is provided on the frame and drives the first clamping assembly, the second clamping assembly, the third clamping assembly and the fourth clamping assembly respectively.

## Description

### CROSS-REFERENCE TO RELATED APPLICATIONS

The present disclosure claims priority to a Chinese patent application No. 202223420779.1 filed with the China National Intellectual Property Administration (CNIPA) on December 16, 2022, entitled "CELL UNLOADING APPARATUS AND CELL WINDING DEVICE", which is hereby incorporated by reference in its entirety.

### TECHNICAL FIELD

The present disclosure relates to the technical field of cell manufacturing, and particularly, to a cell unloading apparatus and a cell winding device including the same.

### BACKGROUND

In related technologies, a cell winding device may be employed to wind a cell, after which the cell is removed from the winding device. A removing process of the cell typically consists of two stages. In the first stage, the unloading apparatus unloads the cell from the winding device. However, as cell technology advances, the sizes of the cell have gradually increased. When the perimeter or width of the cell becomes larger, the gravity of the cell increases accordingly, making the cell prone to collapse during unloading. Furthermore, the inner ring of the cell is prone to developing wrinkles due to interference with a winding needle. In the second stage, the cell is placed onto a suitable platform for processing, during which the unloading apparatus must be disengaged from the cell. However, conventional unloading apparatuses tend to interfere with the cell during this process, which may hinder the smooth removal of the cell.

### SUMMARY

The present disclosure provides a new technical solution for a cell unloading apparatus that addresses at least one of the problems encountered during the unloading process of the prior art, such as the cell being prone to collapse, developing wrinkles, or interfering with the unloading structure.

The present disclosure further provides a cell winding device including the cell unloading apparatus.

According to a first aspect of the present disclosure, a cell unloading apparatus is provided, which is configured for unloading a cell from a winding member, the winding member is formed into a cylindrical shape, the cell is wound around the winding member, and the cell unloading apparatus includes: a frame; a first clamping assembly and a second clamping assembly, the first clamping assembly and the second clamping assembly being arranged on the frame at an interval along a first direction, and being movable respectively to clamp or release the cell; a third clamping assembly and a fourth clamping assembly, the third clamping assembly and the fourth clamping assembly being arranged on the frame at an interval along a second direction, the third clamping assembly, the fourth clamping assembly, the first clamping assembly and the second clamping assembly being distributed at intervals in a circumferential direction of the winding member, the fourth clamping assembly being located below the first clamping assembly, the second clamping assembly and the third clamping assembly in a vertical direction, and the third clamping assembly and the fourth clamping assembly being movable respectively to clamp or release the cell; a driving assembly, the driving assembly being provided on the frame and driving the first clamping assembly, the second clamping assembly, the third clamping assembly and the fourth clamping assembly respectively.

Optionally, the first clamping assembly, the second clamping assembly, the third clamping assembly and the fourth clamping assembly each include: an inner wall clamping member and an outer wall clamping member, when the first clamping assembly, the second clamping assembly, the third clamping assembly and the fourth clamping assembly clamp the cell, the inner wall clamping member abutting against an inner wall surface of the cell and the outer wall clamping member abutting against an outer wall surface of the cell.

Optionally, the first direction is a horizontal direction, the second direction is a vertical direction, and the third clamping assembly is located above the fourth clamping assembly.

Optionally, the driving assembly includes: a first driving member, the first driving member being connected to the first clamping assembly, the second clamping assembly and the third clamping assembly respectively and driving the first clamping assembly, the second clamping assembly and the third clamping assembly to move along an axial direction of the winding member.

Optionally, outer wall clamping members of the first clamping assembly and the second clamping assembly are first clamping members, inner wall clamping members of the first clamping assembly and the second clamping assembly are second clamping members, the first clamping member and the second clamping member are arranged at an interval along the first direction, and the driving assembly further includes: a second driving member, the second driving member being provided on a movable end of the first driving member, being driven by the first driving member to move along an axial direction of the winding member, and connected respectively to the first clamping assembly and the second clamping assembly so as to drive the first clamping assembly and the second clamping assembly to move closer to or farther away from each other; two third driving members, the two third driving members corresponding one-to-one with two first clamping members, each third driving member driving a corresponding first clamping member to move closer to or farther away from a corresponding second clamping member.

Optionally, the inner wall clamping member of the third clamping assembly is a third clamping member, the outer wall clamping member of the third clamping assembly is a fourth clamping member, the third clamping member and the fourth clamping member are arranged at an interval along the second direction, and the driving assembly further includes: a fourth driving member, the fourth driving member being provided on a movable end of the first driving member, being driven by the first driving member to move along an axial direction of the winding member, being connected to the third clamping member and driving the third clamping member to move along the second direction; a fifth driving member, the fifth driving member being provided on the frame, being connected to the fourth clamping member and driving the fourth clamping member to move along the second direction.

Optionally, the driving assembly includes: a sixth driving member, the sixth driving member being provided on the frame, being connected to the fourth clamping assembly and driving the fourth clamping assembly to move along an axial direction of the winding member.

Optionally, an inner wall clamping member of the fourth clamping assembly is a fifth clamping member, an outer wall clamping member of the fourth clamping assembly is a sixth clamping member, the fifth clamping member and the sixth clamping member are arranged at an interval along the second direction, and the driving assembly further includes: a seventh driving member, the seventh driving member being provided on the frame, a movable end of the seventh driving member being provided with the sixth driving member, the seventh driving member driving the sixth driving member and the fourth clamping assembly to move along the second direction; an eighth driving member, the eighth driving member being provided on a movable end of the sixth driving member, being connected to the sixth clamping member and driving the sixth clamping member to move along the second direction.

Optionally, a dimension of the sixth clamping member in the axial direction of the winding member is not less than a width of the cell wound on the winding member in the axial direction of the winding member.

Optionally, each inner wall clamping member has an abutting surface for abutting against the inner wall surface of the cell, and the abutting surface is an arc-shaped surface.

Optionally, inner wall clamping members of the third clamping assembly and the fourth clamping assembly extend along an axial direction of the winding member and are rotatable about their respective axes.

According to a second aspect of the present disclosure, a cell winding device is provided, which includes: a winding member, the winding member being formed into a cylindrical shape, the cell being wound around the winding member; the cell unloading apparatus according to any one of the above embodiments, the cell unloading apparatus unloading the cell from the winding member.

Optionally, after the cell unloading apparatus unloads the cell from the winding member, the first clamping assembly and the second clamping assembly move farther away from each other along the first direction, and the third clamping assembly and the fourth clamping assembly move closer to each other along the second direction to deform the cell.

According to the cell unloading apparatus of the present disclosure, by arranging four clamping assemblies at intervals in the circumferential direction of the winding member, with two of the clamping assemblies spaced apart along the first direction and the other two of the clamping assemblies spaced apart along the second direction, it is possible for the four clamping assemblies to clamp four respective parts of the cell and to support the cell steadily, which may, on one hand, prevent localized collapse of the cell in the unloading process and damage to the cell, and on the other hand, wrinkles generated in a separator inside the cell due to the movement of the winding member can also be avoided, thereby preventing degradation of the performance of the cell. Additionally, the fourth clamping assembly, which is configured for clamping the bottom of the cell, can be independently driven so as to avoid interference between the cell and the fourth clamping assembly in the unloading process.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in and constitute a part of the specification, illustrate embodiments of the present disclosure and, together with the description, serve to explain the principles of the present disclosure.
FIG. 1 is a schematic view of a clamping assembly clamping a cell of a cell unloading apparatus according to an embodiment provided by the present disclosure.
FIG. 2 is a left view of a cell unloading apparatus according to an embodiment provided by the present disclosure;
FIG. 3 is a main view of a cell unloading apparatus according to an embodiment provided by the present disclosure;
FIG. 4 is a top view of a cell unloading apparatus according to an embodiment provided by the present disclosure;
FIG. 5 is a three-dimensional structural schematic view of a part of a cell unloading apparatus according to an embodiment provided by the present disclosure;
FIG. 6 is a three-dimensional structural schematic view of yet another part of a cell unloading apparatus according to an embodiment provided by the present disclosure.

### Description of reference signs:

cell unloading apparatus 100;
frame 10;
first clamping assembly 20; first clamping member 21; second clamping member 22;
second clamping assembly 30;
third clamping assembly 40; third clamping member 41; fourth clamping member 42;
fourth clamping assembly 50; fifth clamping member 51; sixth clamping member 52;
first driving member 61; movable plate 611; second driving member 62; third driving member 63; fourth driving member 64; fifth driving member 65; sixth driving member 66; seventh driving member 67; eighth driving member 68;
winding member 200; accommodation slot 201;
cell 300.

### DETAILED DESCRIPTION

Various exemplary embodiments of the present disclosure will now be described in detail with reference to the accompanying drawings. It is to be noted that unless otherwise specified, the relative arrangements, numerical expressions and values of components and steps illustrated in the embodiments do not limit the scope of the present disclosure.

The description of at least one exemplary embodiment is for illustrative purpose only and in no way implies any restriction on the present disclosure, its applications, or uses.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. Once an element is defined in one drawing, further description thereof may be omitted in subsequent drawings.

Below, the cell unloading apparatus 100 according to embodiment of the present disclosure will be described in detail with reference to the accompanying drawings.

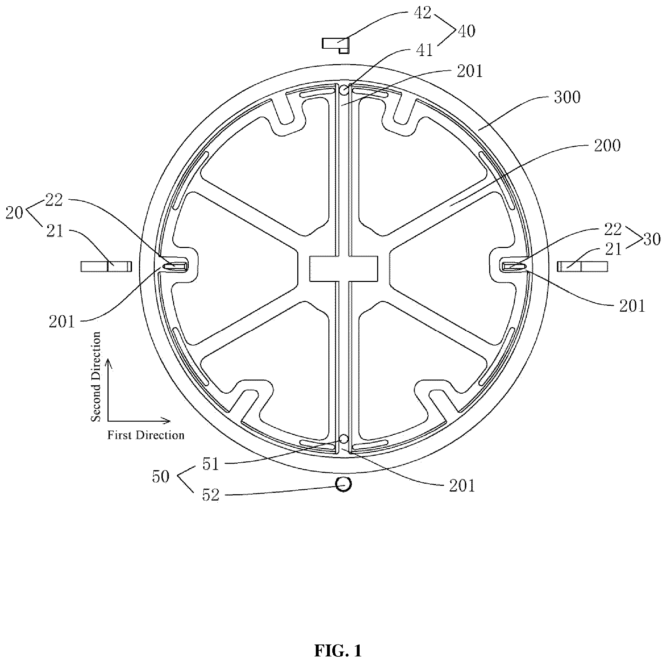

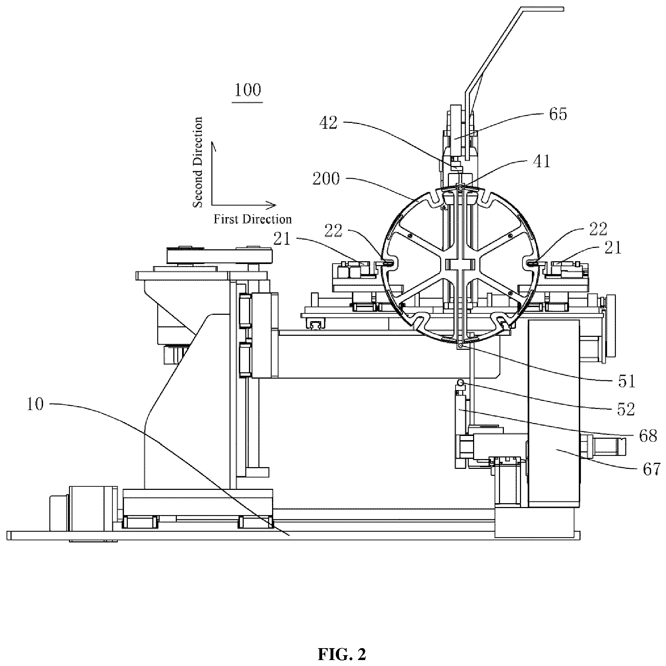

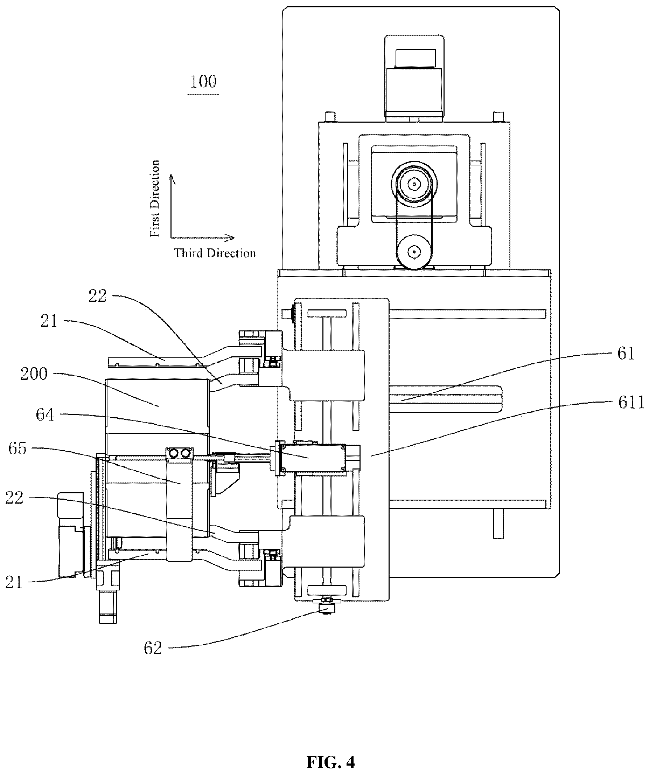

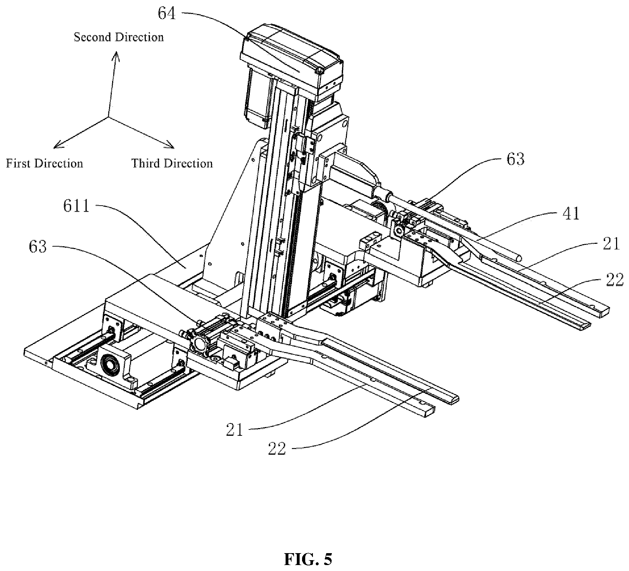

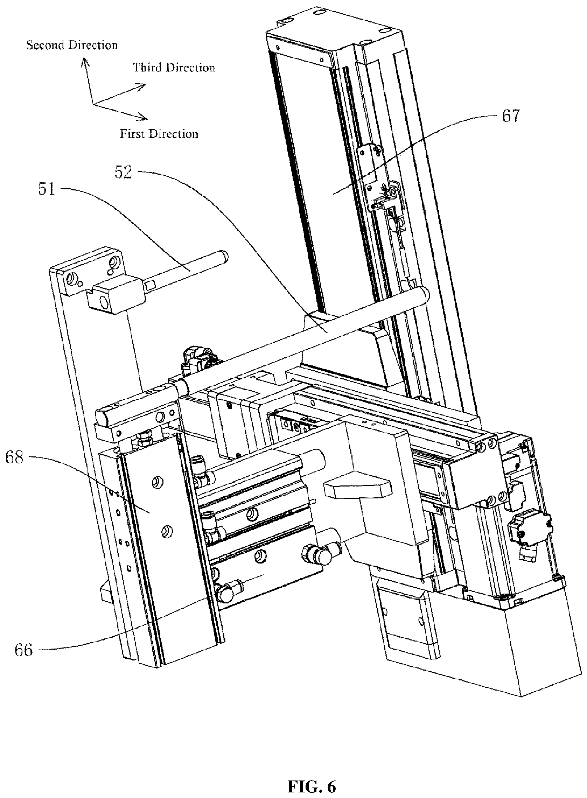

As shown in FIGS. 1 to 6, the cell unloading apparatus 100 according to the embodiment of the present disclosure is configured for unloading the cell 300 from the winding member 200. The winding member 200 is formed in a cylindrical shape, and the cell 300 is wound around the winding member 200. The cell unloading apparatus 100 includes: a frame 10, a first clamping assembly 20, a second clamping assembly 30, a third clamping assembly 40, a fourth clamping assembly 50, and a driving assembly.

Specifically, the first clamping assembly 20 and the second clamping assembly 30 are arranged on the frame 10 at an interval along a first direction, and are movable respectively to clamp or release the cell 300; the third clamping assembly 40 and the fourth clamping assembly 50 are arranged on the frame 10 at an interval along a second direction, the third clamping assembly 40, the fourth clamping assembly 50, the first clamping assembly 20 and the second clamping assembly 30 are distributed at intervals in a circumferential direction of the winding member 200, the fourth clamping assembly 50 is located below the first clamping assembly 20, the second clamping assembly 30 and the third clamping assembly 40 in a vertical direction, and the third clamping assembly 40 and the fourth clamping assembly 50 are movable respectively to clamp or release the cell 300; the driving assembly is provided on the frame 10 and drives the first clamping assembly 20, the second clamping assembly 30, the third clamping assembly 40 and the fourth clamping assembly 50 respectively.

In other words, the cell unloading apparatus 100 according to the present embodiment is mainly composed of the frame 10, the first clamping assembly 20, the second clamping assembly 30, the third clamping assembly 40, the fourth clamping assembly 50, and the driving assembly. Herein, the cell unloading apparatus 100 can take off the cell 300 wound on the winding member 200, and the cell 300 can be wound on the outer circumferential surface of the cylindrical-shaped winding member 200 to form a cell roll. The cell 300 can primarily consist of pole pieces and a separator, and the pole pieces may include both positive and negative pole pieces. After being wound, the cell 300 has an inner wall surface and an outer wall surface, with both surfaces formed by the surface of the separator. For ease of explanation, the side of the cell 300 with the inner wall surface can be defined as the inner side of the cell 300, while the side with the outer wall surface can be defined as the outer side of the cell 300.

The frame 10 is provided with four clamping assemblies, namely the first clamping assembly 20, the second clamping assembly 30, the third clamping assembly 40, and the fourth clamping assembly 50. Herein, the first clamping assembly 20 and the second clamping assembly 30 are arranged opposite to each other and are at an interval along the first direction, while the third clamping assembly 40 and the fourth clamping assembly 50 are arranged opposite to each other and are at an interval along the second direction. The four clamping assemblies are distributed at intervals along the circumferential direction of the winding member 200. Additionally, in the vertical direction, the fourth clamping assembly 50 is located below the other clamping assemblies. That is to say, the fourth clamping assembly 50 is the clamping assembly positioned at the bottommost location among the four clamping assemblies.

For example, as shown in FIG. 1, in the circumferential direction of the winding member 200, the first clamping assembly 20, the fourth clamping assembly 50, the second clamping assembly 30, and the third clamping assembly 40 can be sequentially arranged in a counterclockwise direction.

Additionally, the four clamping assemblies are can independently movable, and each clamping assembly has a clamping state and a releasing state. When each clamping assembly is in the clamping state, it can clamp the cell 300 from both the inner and outer sides of the cell 300. When each clamping assembly is in the releasing state, it can release the cell 300. Once all four clamping assemblies have clamped the cell 300, the winding member 200 can exit the cell 300 from the inner side thereof, thereby disengaging the winding member 200 from the cell 300. At this point, unloading of the cell 300 can be performed by the clamping assemblies.

Optionally, at least four accommodation slots 201 can be provided on the outer circumference of the winding member 200. The four accommodation slots 201 can be distributed along the circumferential direction of the winding member 200. Since the cell 300 is wound on the outer circumferential surface of the winding member 200, the openings of the accommodation slots 201 face the inner wall surface of the cell 300. Additionally, each accommodation slot 201 may correspond to one clamping assembly. When the clamping assembly clamps the cell 300, a part of each clamping assembly can be located on the inner side of the cell 300 and extend into the accommodation slot 201, while another portion of each clamping assembly can be located on the outer side of the cell 300, thereby enabling each clamping assembly to clamp the cell 300 from both the inner and outer sides.

Furthermore, a driving assembly is also provided on the frame 10. The driving assembly can drive the four clamping assemblies individually and can at least enable each clamping assembly to move between the clamping state and the releasing state to clamp or release the cell 300. That is to say, the fourth clamping assembly 50 can be driven independently by the driving assembly. Therefore, in the process of the four clamping assemblies clamping the cell 300 for unloading, the driving assembly can independently drive the fourth clamping assembly 50 to release the cell 300. First, disengage the fourth clamping assembly 50 from the cell 300, and then drive the other clamping assemblies to release the cell 300, so as to disengage the other clamping assemblies from the cell 300. Compared to the simultaneous disengagement of the four clamping assemblies from the cell 300, the cell unloading apparatus 100 of the present embodiment can avoid interference between the fourth clamping assembly 50 and the cell 300 in the process of unloading the cell 300.

Therefore, the cell unloading apparatus 100 provided by the embodiment of the present disclosure, by arranging four clamping assemblies at intervals in the circumferential direction of the winding member 200, with two of the clamping assemblies spaced apart along the first direction and the other two of the clamping assemblies spaced apart along the second direction, it is possible for the four clamping assemblies to clamp four respective parts of the cell 300 so as to support the cell 300 steadily, which may, on one hand, prevent localized collapse of the cell 300 in the unloading process and damage to the cell 300, and on the other hand, wrinkles generated in a separator inside the cell 300 due to the movement of the winding member 200 can also be avoided, thereby preventing degradation of the performance of the cell 300. Additionally, the fourth clamping assembly 50 can be independently driven so as to avoid interference between the cell 300 and the fourth clamping assembly 50 in the unloading process.

The following provides a detailed description of the specific operational process for unloading the cell 300 using the cell unloading apparatus 100 in the present embodiment.

After the winding member 200 completes the winding of the cell 300, first, the four clamping assemblies in the releasing state can move towards the cell 300, a portion of each clamping assembly can extend into the inner side of the cell 300, while another portion of each clamping assembly can move to a position opposite the outer side of the cell 300. Subsequently, the driving assembly can drive each clamping assembly to move from the releasing state to the clamping state to clamp the cell 300. Then, the winding member 200 can exit the cell 300 from the inner side thereof, thereby disengaging the winding member 200 from the cell 300, thereby completing the unloading of the cell 300.

According to one embodiment of the present disclosure, the first clamping assembly 20, second clamping assembly 30, third clamping assembly 40, and fourth clamping assembly 50 each include an inner wall clamping member and an outer wall clamping member. When the first clamping assembly 20, the second clamping assembly 30, the third clamping assembly 40, and the fourth clamping assembly 50 clamp the cell 300, the inner wall clamping member abuts against the inner wall surface of the cell 300, and the outer wall clamping member abuts against the outer wall surface of the cell 300.

In other words, each of the four clamping assemblies includes both an inner wall clamping member and an outer wall clamping member. When the clamping assembly clamps the cell 300, the inner wall clamping member can abut against the inner wall surface of the cell 300, and the outer wall clamping member can abut against the outer wall surface of the cell 300.

Specifically, each clamping assembly can switch between the clamping state and the releasing state. When the clamping assembly is in the clamping state, the inner wall clamping member and the outer wall clamping member cooperate to clamp the cell 300 from both the inner and outer sides. When the clamping assembly is in the releasing state, the distance between the inner wall clamping member and the outer wall clamping member can be greater than the thickness of the cell 300. It should be noted that the thickness of the cell 300 may refer to the distance between the inner wall surface and the outer wall surface of the cell 300.

In the present embodiment, each clamping assembly is primarily composed of an inner wall clamping member and an outer wall clamping member. Through the cooperation of the inner wall clamping member and the outer wall clamping member, it is possible to clamp the cell 300 from both the inner and outer sides, so as to support the cell 300 steadily.

According to other embodiments of the present disclosure, the first direction is the horizontal direction, and the second direction is the vertical direction, and the third clamping assembly 40 is located above the fourth clamping assembly 50.

In other words, the first clamping assembly 20 and the second clamping assembly 30 are spaced apart along the horizontal direction, while the third clamping assembly 40 and the fourth clamping assembly 50 are spaced apart along the vertical direction. For example, the horizontal direction can refer to the left-right direction as shown in FIG. 1, and the vertical direction can refer to the up-down direction as shown in FIG. 1. The first clamping assembly 20 can be located on the left side of the winding member 200, the second clamping assembly 30 can be located on the right side of the winding member 200, the third clamping assembly 40 can be located above the winding member 200, and the fourth clamping assembly 50 can be located below the winding member 200.

In the unloading process, the four clamping assemblies can correspondingly clamp the left end, right end, upper end, and lower end of the cell 300, thereby supporting four parts of the cell 300 through the four clamping assemblies. Since the direction of the force of its own gravity on the cell 300 is vertically downward, by spacing the third clamping assembly 40 and the fourth clamping assembly 50 apart along the vertical direction, it is possible to better prevent the upper end and the lower end of the cell 300 from being deformed and collapsed.

In some specific implementations of the present disclosure, the driving assembly includes a first driving member 61, which is respectively connected to the first clamping assembly 20, the second clamping assembly 30, and the third clamping assembly 40, and drives them to move along the axial direction of the winding member 200.

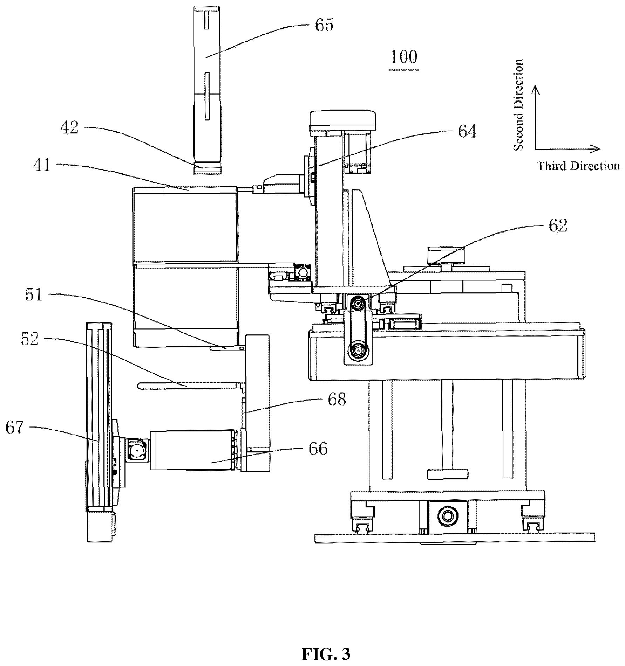

Specifically, a first driving member 61 can be provided on the frame 10. The first driving member 61 can have a movable end, to which the first clamping assembly 20, the second clamping assembly 30, and the third clamping assembly 40 can be connected. It should be noted that this connection can be either direct or indirect, and further details are not elaborated herein. Driven by the first driving member 61, the first clamping assembly 20, the second clamping assembly 30, and the third clamping assembly 40 can synchronously move along the axial direction of the winding member 200. For ease of explanation, the axial direction of the winding member 200 can be defined as the third direction. Optionally, the third direction can refer to the left-right direction as shown in FIG. 3 and can be perpendicular to both the first direction and the second direction.

Optionally, the movable end of the first driving member 61 can be a movable plate 611. The movable plate 611 is respectively connected to the first clamping assembly 20, the second clamping assembly 30, and the third clamping assembly 40. A guide rail extending along the third direction can also be provided on the frame 10. The movable plate 611 can be provided on the guide rail and move along it.

In the unloading process, the first driving member 61 can drive the first clamping assembly 20, the second clamping assembly 30, and the third clamping assembly 40 to move closer to the cell 300 wound on the winding member 200 along the third direction. As the first clamping assembly 20, the second clamping assembly 30, and the third clamping assembly 40 move, their respective inner wall clamping members are caused to extend into the interior of the cell 300. Once the inner wall clamping members have been inserted into the cell 300, the first clamping assembly 20 can clamp the left end of the cell 300, and the second clamping assembly 30 can clamp the right end of the cell 300.

In the present embodiment, by configuring the first driving member 61 to synchronously drive the first clamping assembly 20, the second clamping assembly 30, and the third clamping assembly 40 to move along the axial direction of the winding member 200, the synchronized movement enables the first clamping assembly 20 and the second clamping assembly 30 to simultaneously move to clamp the cell 300. That is to say, in the cell unloading apparatus 100 of the present embodiment, a single driving structure can simultaneously control three clamping assemblies to move closer to or farther away from the cell 300, which helps reduce the required number of the driving structures in the cell unloading apparatus 100 and simplifies the structure of the cell unloading apparatus 100.

According to other embodiments of the present disclosure, the outer wall clamping members of the first clamping assembly 20 and the second clamping assembly 30 are implemented as the first clamping members 21, and the inner wall clamping members of the first clamping assembly 20 and the second clamping assembly 30 are implemented as the second clamping members 22. The first clamping member 21 and the second clamping member 22 are spaced apart along the first direction. The driving assembly further includes a second driving member 62 and two third driving members 63.

Specifically, the second driving member 62 is provided on the movable end of the first driving member 61 and is driven by the first driving member 61 to move along the axial direction of the winding member 200. The second driving member 62 is respectively connected to the first clamping assembly 20 and the second clamping assembly 30 to drive them to move closer to or farther away from each other. The two third driving members 63 correspond one-to-one with the two first clamping members 21, and each third driving member 63 drives the respective first clamping member 21 to move closer to or farther away from the corresponding second clamping member 22.

In other words, the first clamping assembly 20 and the second clamping assembly 30 are mainly composed of the first clamping member 21 and the second clamping member 22. Herein, the first clamping member 21 may be formed as an outer wall clamping member, and the second clamping member 22 may be formed as an inner wall clamping member. The first clamping member 21 and the second clamping member 22 are spaced apart along the first direction. Optionally, the first clamping member 21 and the second clamping member 22 may be spaced apart along the horizontal direction. When the first clamping assembly 20 and the second clamping assembly 30 are in the clamping state, the first clamping member 21 may abut against the outer wall surface of the cell 300, and the second clamping member 22 may extend into the accommodation slot 201 of the winding member 200 and abut against the inner wall surface of the cell 300. When the first clamping assembly 20 and the second clamping assembly 30 are in the releasing state, the distance between the first clamping member 21 and the second clamping member 22 can be greater than the thickness of the cell 300.

Additionally, a second driving member 62 may be provided on the movable end of the first driving member 61. The first clamping assembly 20 and the second clamping assembly 30 may be provided on the movable end of the second driving member 62. Therefore, the first driving member 61 can drive the second driving member 62, the first clamping assembly 20, and the second clamping assembly 30 to move simultaneously along the axial direction of the winding member 200. The second driving member 62 can drive the first clamping assembly 20 and the second clamping assembly 30 to move closer to or farther away from each other.

Optionally, the second driving member 62 can include a drive motor, a transmission mechanism, and a lead screw. Herein, the drive motor can drive the lead screw via the transmission mechanism for the lead screw to rotate. One end of the lead screw can form a first threaded section, the other end of the lead screw can form a second threaded section, and the first and second threaded sections may be oppositely threaded on their respective outer circumferential surfaces. The first clamping assembly 20 may be threadedly engaged with the first threaded section, and the second clamping assembly 30 may be threadedly engaged with the second threaded section. Rotation of the lead screw thereby enables opposing movement-either towards or away from each other-of the first clamping assembly 20 and the second clamping assembly 30.

In addition, there may be provided two third driving members 63, each may be connected to one first clamping member 21 and drive the corresponding first clamping member 21 to move closer to or farther away from the second clamping member 22.

The following provides a detailed description of the specific operational process of the first clamping assembly 20 and the second clamping assembly 30 in the cell unloading apparatus 100 of the present embodiment.

First, the first driving member 61 can drive the first clamping assembly 20 and the second clamping assembly 30 to move to a position facing the cell 300 wound on the winding member 200. At this point, the first clamping member 21 may face the outer wall surface of the cell 300, and the second clamping member 22 may face the inner wall surface of the cell 300. Next, the second driving member 62 can simultaneously drive the first clamping assembly 20 and the second clamping assembly 30 to move farther away from each other, so as to enable the two second clamping members 22 to abut against the inner wall surface of the cell 300. Then, the two third driving members 63 can drive the corresponding first clamping members 21 to move closer to the corresponding second clamping members 22, thereby enabling the first clamping member 21 and the second clamping member 22 to cooperate to clamp the cell 300.

In the present embodiment, the provision of a single second driving member 62 enables driving the first clamping assembly 20 and the second clamping assembly 30 to move closer to or farther away from each other. That is to say, the cell unloading apparatus 100 of the present embodiment uses a single driving structure to simultaneously control the second clamping members 22 of the two clamping assemblies to abut against the inner wall of the cell 300, thereby positioning the cell 300. This helps reduce the required number of the driving structures in the cell unloading apparatus 100 and simplifies the structure thereof. Additionally, by using the two third driving members 63 to respectively drive the respective first clamping members 21 to move closer to the corresponding second clamping members 22 so as to clamp the cell 300, thereby enabling a sequence of positioning of the cell 300 followed by clamping of the same.

In some specific implementations of the present disclosure, the inner wall clamping member of the third clamping assembly 40 is implemented as a third clamping member 41, and the outer wall clamping member of the third clamping assembly 40 is implemented as a fourth clamping member 42. The third clamping member 41 and the fourth clamping member 42 are spaced apart along the second direction. The driving assembly includes a fourth driving member 64 and a fifth driving member 65. The fourth driving member 64 is provided on the movable end of the first driving member 61, and is driven by the first driving member 61 to move along the axial direction of the winding member 200. The fourth driving member 64 is connected to the third clamping member 41, and drives the third clamping member 41 to move along the second direction. The fifth driving member 65 is provided on the frame 10, is connected to the fourth clamping member 42, and drives the fourth clamping member 42 to move along the second direction.

In other words, the third clamping assembly 40 may be mainly composed of the third clamping member 41 and the fourth clamping member 42. Herein, the third clamping member 41 may be formed as the inner wall clamping member of the third clamping assembly 40, and the fourth clamping member 42 may be formed as the outer wall clamping member of the third clamping assembly 40. Additionally, the third clamping member 41 and the fourth clamping member 42 may be spaced apart along the second direction. Optionally, the third clamping member 41 and the fourth clamping member 42 may be spaced apart along the vertical direction, and the third clamping member 41 may be located below the fourth clamping member 42.

The movable end of the first driving member 61 can also be provided with the fourth driving member 64. Since the fourth driving member 64 is connected to the third clamping member 41, the fourth driving member 64 and the third clamping member 41 can synchronously move along the third direction under the drive of the first driving member 61, thereby enabling the third clamping member 41 to extend into the interior of the cell 300 and face the inner wall surface of the cell 300.

Additionally, the fourth driving member 64 can drive the third clamping member 41 to move along the second direction, and the fifth driving member 65 can drive the fourth clamping member 42 to move along the second direction. Through the cooperation of the fourth driving member 64 and the fifth driving member 65, it is possible to enable the third clamping member 41 and the fourth clamping member 42 to move closer to or farther away from each other, so as to clamp or release the cell 300. It should be noted that the position of the fourth clamping member 42 in the third direction can be fixed relative to the frame 10 to prevent the fourth clamping member 42 from moving along the third direction, which helps reduce the required number of the driving structures in the cell unloading apparatus 100 and simplifies the structure of the cell unloading apparatus 100.

The following describes the specific operational process of the third clamping assembly 40, in an example where the third clamping member 41 and the fourth clamping member 42 are spaced apart along the vertical direction.

First, the first driving member 61 can drive the third clamping member 41 to move closer to the cell 300 along the third direction, and enable the third clamping member 41 to extend into the interior of the cell 300 to face the inner wall surface of the cell 300. Next, the fourth driving member 64 can drive the third clamping member 41 to move upward along the vertical direction, such that the third clamping member 41 abuts against the inner wall surface of the cell 300, thereby positioning the cell 300. Subsequently, the fifth driving member 65 can drive the fourth clamping member 42 to move downward along the vertical direction, such that the fourth clamping member 42 abuts against the outer wall surface of the cell 300, achieving the clamping of the cell 300 by the third clamping assembly 40.

In the present embodiment, positioning of the cell 300 can be achieved by the provision that the fourth driving member 64 can drive the third clamping member 41, while clamping of the cell 300 can be achieved by the provision that the fifth driving member 65 can drive the fourth clamping member 42. That is to say, the third clamping member 41 and the fourth clamping member 42 are each driven by an independent driving structure. Accordingly, it is possible for the third clamping member 41 and the fourth clamping member 42 to be sequentially driven closer to the cell 300 through independent driving structures to enable a sequence of positioning of the cell 300 followed by clamping of the same.

According to some optional embodiments of the present disclosure, the driving assembly includes a sixth driving member 66. The sixth driving member 66 is provided on the frame 10, is connected to the fourth clamping assembly 50, and drives the fourth clamping assembly 50 to move along the axial direction of the winding member 200.

Specifically, the movement of the fourth clamping assembly 50 in the third direction may be driven by the sixth driving member 66. The sixth driving member 66 can be connected to the frame 10, either directly or indirectly. Through the sixth driving member, the fourth clamping assembly 50 can move closer to or farther away from the cell 300 wound on the winding member 200 along the third direction, thereby facilitating the clamping of the cell 300 by the fourth clamping assembly 50.

According to other embodiments of the present disclosure, the inner wall clamping member of the fourth clamping assembly 50 is a fifth clamping member 51, and the outer wall clamping member of the fourth clamping assembly 50 is a sixth clamping member 52. The fifth clamping member 51 and the sixth clamping member 52 are spaced apart along the second direction. The driving assembly further includes a seventh driving member 67 and an eighth driving member 68. The seventh driving member 67 is provided on the frame 10, is provided with the sixth driving member 66 on the movable end thereof, and drives the sixth driving member 66 and the fourth clamping assembly 50 to move along the second direction. The eighth driving member 68 is provided on the movable end of the sixth driving member 66, is connected to the sixth clamping member 52, and drives the sixth clamping member 52 to move along the second direction.

In other words, the fourth clamping assembly 50 is mainly composed of the fifth clamping member 51 and the sixth clamping member 52. Herein, the fifth clamping member 51 may be formed as the inner wall clamping member of the fourth clamping assembly 50, and the sixth clamping member 52 may be formed as the outer wall clamping member of the fourth clamping assembly 50. Additionally, the fifth clamping member 51 and the sixth clamping member 52 are spaced apart along the second direction. Optionally, the fifth clamping member 51 and the sixth clamping member 52 may be spaced apart along the vertical direction, and the fifth clamping member 51 may be located above the sixth clamping member 52.

The frame 10 is also provided with a seventh driving member 67 thereon, and the seventh driving member 67 may have a movable end. The sixth driving member 66 and the fourth clamping assembly 50 are both provided on the movable end of the seventh driving member 67. The movable end of the seventh driving member 67 can move along the second direction, so the sixth driving member 66 and the fourth clamping assembly 50 can synchronously move along the second direction.

Additionally, the movable end of the sixth driving member 66 can be provided with an eighth driving member 68. When the sixth driving member 66 drives the fourth clamping assembly 50 to move along the third direction, the eighth driving member 68 and the fourth clamping assembly 50 move synchronously. Moreover, the eighth driving member 68 may be connected to the sixth clamping member 52 and drives the sixth clamping member 52 to move closer to or farther away from the fifth clamping member 51 along the second direction, enabling the fifth clamping member 51 and the sixth clamping member 52 to cooperate to clamp or release the cell 300.

The following describes the specific operational process of the fourth clamping assembly 50, in an example where the fifth clamping member 51 and the sixth clamping member 52 are spaced apart along the vertical direction.

First, the sixth driving member 66 can drive the fourth clamping assembly 50 to move closer to the cell 300 wound on the winding member 200 along the third direction, allowing the fifth clamping member 51 to extend into the interior of the cell 300 to face the inner wall surface of the cell 300. Next, the seventh driving member 67 can drive the fourth clamping assembly 50 to move downward along the vertical direction, such that the fifth clamping member 51 abuts against the inner wall surface of the cell 300 to position the cell 300. Finally, the eighth driving member 68 can drive the sixth clamping member 52 to move upward, such that the sixth clamping member 52 abuts against the outer wall surface of the cell 300, achieving the clamping of the cell 300 by the fourth clamping assembly 50.

In the present embodiment, positioning of the cell 300 can be achieved by the provision that the seventh driving member 67 may drive the fifth clamping member 51, while clamping of the cell 300 can be achieved by the provision that the eighth driving member 68 may drive the sixth clamping member 52. That is to say, the fifth clamping member 51 and the sixth clamping member 52 are each driven by an independent driving structure. Accordingly, it is possible for the fifth clamping member 51 and the sixth clamping member 52 to be sequentially driven closer to the cell 300 through independent driving structures to enable a sequence of positioning of the cell 300 followed by clamping of the same.

According to some optional embodiments of the present disclosure, the dimension of the sixth clamping member 52 in the axial direction of the winding member 200 is not less than the width of the cell 300 wound on the winding member 200 in the axial direction of the winding member 200. Herein, the width of the cell 300 in the axial direction of the winding member 200 can be the distance between the two end surfaces of the cell 300 in the third direction, i.e., the dimension of the cell 300 in the axial direction of the winding member 200.

In other words, the dimension of the sixth clamping member 52 in the third direction is not less than the dimension of the cell 300 in the third direction, so as to increase the contact area between the sixth clamping member 52 and the cell 300, thereby improving the stability of the cell 300 after being clamped.

Optionally, the winding member 200 moves along its own axis closer to the frame 10 (in the direction as shown in FIG. 3 opposite to the third direction), so as to disengage from the cell 300 wound on the winding member 200. That is to say, the inner wall clamping members of the four clamping assemblies can extend into the cell 300 from the first side of the cell 300, while the winding member 200 can exit the cell 300 from the second side of the cell 300. The third clamping member 41 and the fifth clamping member 51 can at least abut against the inner wall surface of the cell 300 near the first side of the cell 300, to avoid the inner wall of the cell 300 from wrinkling due to the inner wall surface near the first side of the cell 300 not being clamped when the winding member 200 disengages from the cell 300.

According to some optional embodiments of the present disclosure, each inner wall clamping member has an abutting surface for abutting against the inner wall surface of the cell 300, and the abutting surface is an arc-shaped surface.

That is to say, each inner wall clamping member of the four clamping assemblies has a partial surface that abuts against the inner wall surface of the cell 300, and this partial surface forms the abutting surface of the inner wall clamping member. By setting the abutting surface as an arc-shaped surface, the clamping operation ensures even stress distribution across the cell 300, thereby preventing damage to the inner wall surface of the cell 300 caused by the clamping assembly.

Specifically, the above second clamping member 22, the third clamping member 41, and the fifth clamping member 51 can have an arc-shaped abutting surface. For example, the left side of the left second clamping member 22, the right side of the right second clamping member 22, the upper side of the third clamping member 41, and the lower side of the fifth clamping member 51 in FIG. 1 can be arc-shaped surfaces.

According to other embodiments of the present disclosure, inner wall clamping members of the third clamping assembly 40 and the fourth clamping assembly 50 extend along an axial direction of the winding member 200 and are rotatable about their respective axes.

Specifically, the inner wall clamping members of the third clamping assembly 40 and the fourth clamping assembly 50 can extend along the third direction, and the inner wall clamping members can generally be cylindrical in shape, such that the inner wall clamping members can rotate around their own axes. Optionally, the inner wall clamping members can be inner wall clamping needles, with their axes extending along the third direction.

That is to say, the third clamping member 41 and the fifth clamping member 51 can respectively extend along the axial direction of the winding member 200 and can rotate around their own axes.

With the provision that the inner wall clamping needles can rotate around their own axes, it is possible to facilitate reduction on the frictional force between the inner wall clamping needles and the inner wall surface of the cell 300, thereby minimizing potential damage to the inner wall surface of the cell 300 in the unloading process.

The embodiment of the present disclosure also provides a cell winding device, which includes a winding member 200 and a cell unloading apparatus 100 according to the above embodiment. Herein, the winding member 200 is formed in a cylindrical shape, and the cell 300 is wound around the winding member 200. Given that the cell unloading apparatus 100 according to the embodiment of the present disclosure exhibits the above technical effects, the cell winding device according to the embodiment of the present disclosure also has corresponding technical effects, namely preventing localized collapse of the cell 300 in the unloading process and damage to the cell 300, as well as preventing wrinkles in the separator inside the cell 300.

According to other embodiments of the present disclosure, after the cell unloading apparatus 100 unloads the cell 300 from the winding member 200, the first clamping assembly 20 and the second clamping assembly 30 move farther away from each other along the first direction, and the third clamping assembly 40 and the fourth clamping assembly 50 move closer to each other along the second direction to deform the cell.

Specifically, after all four clamping assemblies have clamped the cell 300, and the winding member 200 has been disengaged from the cell 300, the second driving member 62 can drive the first clamping assembly 20 and the second clamping assembly 30 to move farther away from each other, the fourth driving member 64 can drive the third clamping member 41 towards the fourth clamping assembly 50, and the seventh driving member 67 can drive the fourth clamping assembly 50 towards the third clamping member 41, thereby causing the shape of the cell 300 to change from a circular profile to a flattened configuration.

In the present embodiment, the cell 300 can be unloaded through the movement of the four clamping assemblies, such that the cell 300 is deformed, and the four clamping assemblies can ensure more uniform stress distribution across the cell 300 in the unloading process.

Optionally, in the unloading process, the speed at which the first clamping assembly 20 and the second clamping assembly 30 move farther away from each other can be lower than the speed at which the third clamping member 41 and the fourth clamping assembly 50 move closer to each other, so as to avoid damage to the cell 300 caused by excessive tension subjected by the cell 300 in the unloading process, while changing the originally circular or elliptical cell 300 into a flattened form.

Although some specific embodiments of the present disclosure have been described in detail through examples, those skilled in the art should understand that the above examples are for illustration only and are not intended to limit the scope of the present disclosure. It will be appreciated by those skilled in the art that modifications may be made to the above embodiments without departing from the scope and spirit of the present disclosure. The scope of the present disclosure is ultimately defined by the appended claims.

## Claims

1. A cell unloading apparatus (100) for unloading a cell (300) from a winding member (200), the cell (300) being wound around the winding member (200), **characterized in that** the cell unloading apparatus (100) comprises:
a frame (10);
a first clamping assembly (20) and a second clamping assembly (30), the first clamping assembly (20) and the second clamping assembly (30) being arranged on the frame (10) at an interval along a first direction, and being movable respectively to clamp or release the cell (300);
a third clamping assembly (40) and a fourth clamping assembly (50), the third clamping assembly (40) and the fourth clamping assembly (50) being arranged on the frame (10) at an interval along a second direction, the third clamping assembly (40), the fourth clamping assembly (50), the first clamping assembly (20) and the second clamping assembly (30) being distributed at intervals in a circumferential direction of the winding member (200), the fourth clamping assembly (50) being located below the first clamping assembly (20), the second clamping assembly (30) and the third clamping assembly (40) in a vertical direction, and the third clamping assembly (40) and the fourth clamping assembly (50) being movable respectively to clamp or release the cell (300); and
a driving assembly, the driving assembly being provided on the frame (10) and driving the first clamping assembly (20), the second clamping assembly (30), the third clamping assembly (40) and the fourth clamping assembly (50) respectively.

2. The cell unloading apparatus (100) according to claim 1, **characterized in that** the first clamping assembly (20), the second clamping assembly (30), the third clamping assembly (40) and the fourth clamping assembly (50) each comprises:
an inner wall clamping member and an outer wall clamping member, when the first clamping assembly (20), the second clamping assembly (30), the third clamping assembly (40) and the fourth clamping assembly (50) clamp the cell (300), the inner wall clamping member abutting against an inner wall surface of the cell (300) and the outer wall clamping member abutting against an outer wall surface of the cell (300).

3. The cell unloading apparatus (100) according to claim 1 or 2, **characterized in that** the first direction is a horizontal direction, the second direction is a vertical direction, and the third clamping assembly (40) is located above the fourth clamping assembly (50).

4. The cell unloading apparatus (100) according to any one of claims 1 to 3, **characterized in that** the driving assembly comprises:
a first driving member (61), the first driving member (61) being connected to the first clamping assembly (20), the second clamping assembly (30) and the third clamping assembly (40) and driving the first clamping assembly (20), the second clamping assembly (30) and the third clamping assembly (40) to move along an axial direction of the winding member (200).

5. The cell unloading apparatus (100) according to any one of claims 2 to 4, **characterized in that** outer wall clamping members of the first clamping assembly (20) and the second clamping assembly (30) are first clamping members (21), inner wall clamping members of the first clamping assembly (20) and the second clamping assembly (30) are second clamping members (22), the first clamping member (21) and the second clamping member (22) are arranged at an interval along the first direction, and the driving assembly further comprises:
a second driving member (62), the second driving member (62) being provided on a movable end of the first driving member (61), being driven by the first driving member (61) to move along an axial direction of the winding member (200), and connected respectively to the first clamping assembly (20) and the second clamping assembly (30) so as to drive the first clamping assembly (20) and the second clamping assembly (30) to move closer to or farther away from each other; and
two third driving members (63), the two third driving members (63) corresponding one-to-one with two first clamping members (21), each third driving member (63) driving a corresponding first clamping member (21) to move closer to or farther away from a corresponding second clamping member (22).

6. The cell unloading apparatus (100) according to any one of claims 2 to 5, **characterized in that** the inner wall clamping member of the third clamping assembly (40) is a third clamping member (41), the outer wall clamping member of the third clamping assembly (40) is a fourth clamping member (42), the third clamping member (41) and the fourth clamping member (42) are arranged at an interval along the second direction, and the driving assembly further comprises:
a fourth driving member (64), the fourth driving member (64) being provided on a movable end of the first driving member (61), being driven by the first driving member (61) to move along an axial direction of the winding member (200), being connected to the third clamping member (41) and driving the third clamping member (41) to move along the second direction; and
a fifth driving member (65), the fifth driving member (65) being provided on the frame (10), being connected to the fourth clamping member (42) and driving the fourth clamping member (42) to move along the second direction.

7. The cell unloading apparatus (100) according to claim 1, **characterized in that** the driving assembly comprises:
a sixth driving member (66), the sixth driving member (66) being provided on the frame (10), being connected to the fourth clamping assembly (50) and driving the fourth clamping assembly (50) to move along an axial direction of the winding member (200).

8. The cell unloading apparatus (100) according to claim 7, **characterized in that** an inner wall clamping member of the fourth clamping assembly (50) is a fifth clamping member (51), an outer wall clamping member of the fourth clamping assembly (50) is a sixth clamping member (52), the fifth clamping member (51) and the sixth clamping member (52) are arranged at an interval along the second direction, and the driving assembly further comprises:
a seventh driving member (67), the seventh driving member (67) being provided on the frame (10), a movable end of the seventh driving member (67) being provided with the sixth driving member (66), the seventh driving member (67) driving the sixth driving member (66) and the fourth clamping assembly (50) to move along the second direction; and
an eighth driving member (68), the eighth driving member (68) being provided on a movable end of the sixth driving member (66), being connected to the sixth clamping member (52) and driving the sixth clamping member (52) to move along the second direction.

9. The cell unloading apparatus (100) according to claim 8, **characterized in that**
a dimension of the sixth clamping member (52) in the axial direction of the winding member (200) is not less than a width of the cell (300) wound on the winding member (200) in the axial direction of the winding member (200).

10. The cell unloading apparatus (100) according to any one of claims 2 to 9, **characterized in that** each inner wall clamping member has an abutting surface for abutting against the inner wall surface of the cell (300), and the abutting surface is an arc-shaped surface.

11. The cell unloading apparatus (100) according to any one of claims 2 to 10, **characterized in that** inner wall clamping members of the third clamping assembly (40) and the fourth clamping assembly (50) extend along an axial direction of the winding member (200) and are rotatable about their respective axes.

12. A cell winding device, **characterized in that** it comprises:
a winding member (200), the winding member (200) being formed into a cylindrical shape, the cell (300) being wound around the winding member (200); and
the cell unloading apparatus (100) according to any one of claims 1 to 11, the cell unloading apparatus (100) unloading the cell (300) from the winding member (200).

13. The cell winding device according to claim 12, **characterized in that** after the cell unloading apparatus (100) unloads the cell (300) from the winding member (200), the first clamping assembly (20) and the second clamping assembly (30) move farther away from each other along the first direction, and the third clamping assembly (40) and the fourth clamping assembly (50) move closer to each other along the second direction to deform the cell (300).
